# EUROPEAN PATENT APPLICATION

(11) **EP 4 534 310 A1**
(43) Date of publication of application: **09.04.2025**
(21) Application number: 24202253.1
(22) Date of filing: 24.09.2024
(51) Int. Cl.: B60K 5/12, F16B 29/00

(54) **COMPOSITE GUIDE SLEEVE FOR POWERTRAIN MOUNTING ASSEMBLY**

(30) Priority: 21.09.2023 GB 202314528
(71) Applicant: Nissan Motor Manufacturing (UK) Limited, Cranfield, Bedfordshire MK43 0DB (GB)
(72) Inventor: Delgado Deza, Victor Manuel, 08040 Barcelona (ES)

(57) **Abstract**

According to an aspect of the present invention there is provided a composite guide sleeve for a fastening element of a powertrain mounting assembly. The guide sleeve comprises: an elongate tubular body extending from a first end to an opposing second end, the tubular body comprising: a rigid body portion and a compressible body portion arranged along the length of the tubular body; and a bore extending from the first end to the second of the tubular body for receiving the fastening element so that, in use, the sleeve guides the fastening element through an isolator of the powertrain mounting assembly so as to join, via the isolator, a vehicle powertrain to a chassis of the vehicle, with the guide sleeve arranged between opposing surfaces of the powertrain mounting assembly. The rigid body portion is formed of a first material and the compressible body portion is formed of a second material. A modulus of elasticity of the second material is lower than that of the first material so that the compressible body portion is axially deformable between the opposing surfaces of the powertrain mounting assembly by a preload of the fastening.

## Description

### TECHNICAL FIELD

The present invention relates to a composite guide sleeve for a powertrain mounting assembly. Aspects of the invention relate to a composite guide sleeve, to a powertrain mounting assembly, and to a vehicle.

### BACKGROUND TO THE INVENTION

In automotive vehicles, the powertrain is typically mounted to the vehicle chassis, which forms the main load bearing structure of the vehicle and provides a relatively rigid support frame for securing and protecting the powertrain. However, operation of the powertrain generates noise, vibration, and harshness (NVH), which can be transmitted through the chassis to the vehicle cabin and experienced by the vehicle occupants. In order to mitigate the NVH, the powertrain is typically mounted to the chassis by way of an isolator or vibration damper, which serves to isolate the chassis from the vibrations generated by the operation of the powertrain.

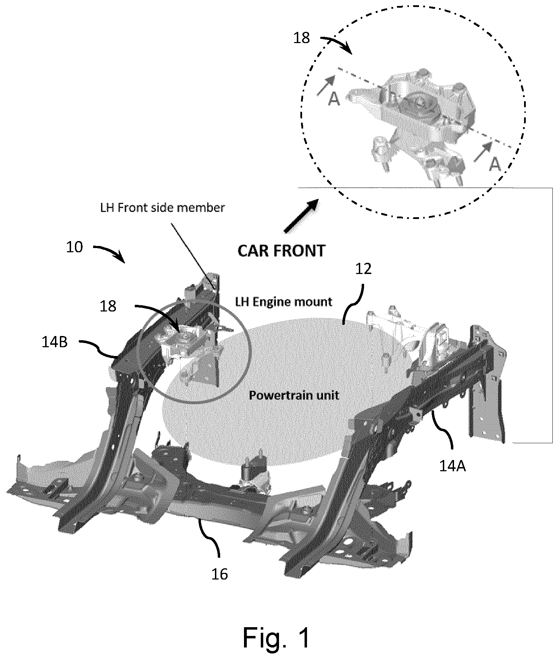

By way of example, Figure 1 shows a traditional powertrain support frame 10, which forms a portion of an automotive vehicle chassis. The powertrain support frame 10 exists to substantially fix the powertrain 12 relative to the vehicle chassis. This type of frame 10 is typically disposed to the front of the vehicle but, in some examples, it may be disposed in the middle or the rear of the vehicle, depending on the desired powertrain mounting location. A support frame 10 such as this typically comprises left-hand and right-hand side members 14A, 14B, as shown in Figure 1. In this example, the side members 14A, 14B are additionally joined on their underside by a transverse member 16, which may or may not be detachable. Each of the side members 14A, 14B and the transverse member 16 feature a respective powertrain mounting assembly 18 for supporting the powertrain 12, although only a single assembly is shown in Figure 1. It shall be appreciated that the powertrain 12 is substantially constrained in all degrees of freedom by mounting the powertrain 12 to the chassis with at least three such mounting assemblies 18. Each mounting assembly 18 is therefore configured to support the powertrain 12 in position, whilst isolating the vehicle chassis from the vibrations generated by operation of the powertrain 12.

For example, the mounting assembly 18 may feature an isolator attached to, or otherwise integrated into, the support frame 10 at each mounting point, and a fastening element may be received through a bore of the isolator to join the powertrain 12 to the support frame 10. In this respect, the isolator is usually formed from an elastic damping material, such as a rubber, arranged between the powertrain 12 and the chassis to absorb the energy of the vibrations generated by the powertrain 12 and minimise transmission to the support frame 10.

However, for manufacturing efficiency, the vehicle chassis and the powertrain 12 are typically sub-assembled separately and joined together at a later stage. Manipulating the sub-assemblies can be difficult and cumbersome though, given their size and weight. For example, aligning the mounting components can be particularly challenging and the pliability of the isolator makes the assembly even more difficult. In particular, the fastening element is prone to snagging or catching on the relatively soft and pliable material of the isolator during assembly. This issue is detrimental to the alignment and engagement of the fastening element, which can damage the isolator and leads to increased assembly times.

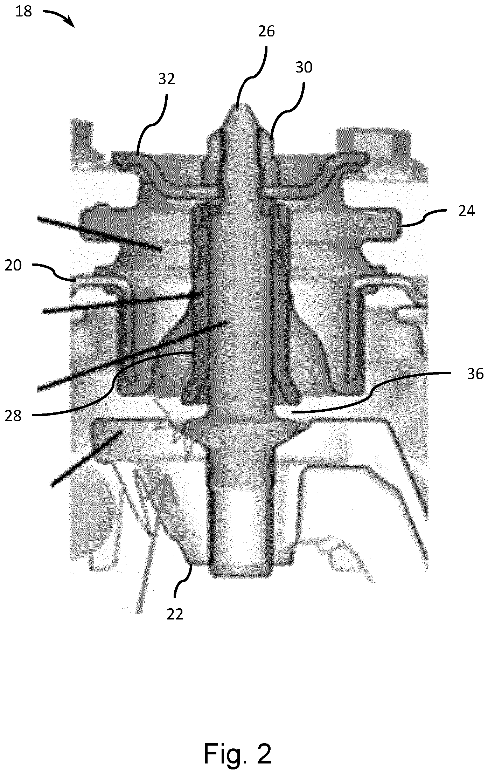

To mitigate this issue, a guide sleeve may be placed over the fastening element, prior to final assembly, and the guide sleeve acts to guide the fastening element through the isolator when the two sub-assemblies are joined together. By way of example, Figure 2 shows a cross-sectional view of an exemplary powertrain mounting assembly 18. As shown, respective mounting brackets 20, 22 of the support frame 10 and the powertrain 12 are joined together by a fastening element 26, which extends through an isolator 24 attached to the mounting bracket 20 of the support frame 10. One end of the fastening element 26 is therefore fixed to the powertrain 12, while the other end of the fastening element 26 passes through a bore / opening of the isolator 24 and receives a complementary threaded element, such as a nut 30. The nut 30 is tightened or torqued to compress a retaining element 32, such as a washer, against the upper surface of the isolator 24. In this manner, the isolator 24 is arranged between the powertrain 12 and the support frame 10 and the isolator 24 is compressed between opposing surfaces of the retaining element 32 and the powertrain 12, as the fastening is tightened. This arrangement provides effective vibration isolation of the powertrain 12.

The guide sleeve 28 is fitted over the fastening element 26 for insertion through the opening of the isolator 24 when the powertrain 12 is joined to the chassis. For this purpose, the guide sleeve 28 is a rigid element, shown to include lead-in features / geometry on its outer / external surfaces that reduce the risk of the fastening element 26 snagging or catching on the pliable material of the isolator 24 during assembly. The lead-in geometry therefore allows the fastening element 26 and the guide sleeve 28 to pass through the isolator 24 of the mounting assembly 18 with relative ease. In this manner, the guide sleeve 28 contributes to manufacturing efficiency improvements and mitigates the risk of damage to the mounting assembly, at relatively low-cost.

However, such mounting assemblies are known to be susceptible to other NVH issues and it is against this background that the present invention has been devised.

### SUMMARY OF THE INVENTION

According to an aspect of the present invention there is provided a composite guide sleeve for a fastening element of a powertrain mounting assembly. The guide sleeve comprises: an elongate tubular body extending from a first end to an opposing second end, the tubular body comprising: a rigid body portion and a compressible body portion arranged along the length of the tubular body; and a bore extending from the first end to the second of the tubular body for receiving the fastening element so that, in use, the sleeve guides the fastening element through an isolator of the powertrain mounting assembly so as to join, via the isolator, a vehicle powertrain to a chassis of the vehicle, with the guide sleeve arranged between opposing surfaces of the powertrain mounting assembly. The rigid body portion is formed of a first material and the compressible body portion is formed of a second material. A modulus of elasticity of the second material is lower than that of the first material so that the compressible body portion is axially deformable between the opposing surfaces of the powertrain mounting assembly by a preload of the fastening.

In this manner, the rigid body portion of the guide sleeve provides a suitably rigid structure for insertion through the isolator, guiding the fastening element therethrough, and the compressible body portion is squeezed or otherwise compressed as the fastening is tightened, brining opposing ends of the guide sleeve into engagement with opposing surfaces of the mounting assembly. For example, one end of the guide sleeve may engage a surface of the powertrain or a mounting bracket thereof and the opposing end of the guide sleeve may engage an opposing surface of a retaining element used secure the fastening through the isolator. The ability of the guide sleeve to move or vibrate, in situ, is therefore restricted and the guide sleeve therefore provides for efficient mounting of the powertrain to the chassis, whilst mitigating NVH issues. It shall be appreciated that the guide sleeve can therefore be oversized for a nominal gap between the opposing surfaces of the powertrain mounting assembly and the tolerance can be relatively large to minimise the cost of manufacture.

In examples, the composite guide sleeve may be formed by extrusion blow moulding or an Exchange^{®} blow moulding process.

In examples, the rigid body portion may be a major body portion of the guide sleeve, and the compressible body portion may be a minor body portion. That is, the compressible body portion may define a relatively short portion along the length of the tubular body, while the rigid body portion may extend along a much longer portion of the tubular body, and may even extend along the remainder of the guide sleeve.

Optionally, the compressible body portion may be formed at the second end of the tubular body for engaging one of the opposing surfaces of the powertrain mounting assembly, in use. In this manner, the end of the guide sleeve may be readily deformed by the fastening to accommodate imperfections and produce a firm engagement with a respective one of the opposing surfaces of the mounting assembly. For example, the second end of the tubular body may engage a surface of the powertrain or a mounting bracket thereof.

Optionally, an end of the elongate tubular body may comprise a funnel-shaped section. A funnel-shaped section presents a radial enlargement providing a section with reduced axial stiffness and providing a wider end face for engagement with one of the opposing surfaces of the powertrain mounting assembly. The funnel-shaped section may be frustoconical, for example.

Optionally, at least a portion of the funnel-shaped section is defined by the compressible body portion. In this manner, the axial stiffness of the compressible body portion may be further reduced for relative ease of axial deformation.

In examples, the remainder of the guide sleeve may be defined by the rigid body portion. In this manner, the guide sleeve may be substantially rigid for ease of handling, receiving the fastening element and insertion through the isolator.

The rigid body portion may, for example, define one or more lead-in features for guiding the sleeve through a bore of the isolator, in use. The lead-in features provide for enhanced alignment with the isolator and ease of assembly.

Optionally, at least one lead-in feature may be defined by an external expansion along the length of the tubular body. Optionally, at least one lead-in feature may take the form of a shoulder formation; and/or a frusto-conical portion. Such formations are easily formed and provide effective lead-in means.

In an example, the rigid body portion may comprise: a first cylindrical portion; a second cylindrical portion having a greater outer diameter than the first cylindrical portion; and a transition portion extending between the first and second cylindrical portions. The transition portion may, for example, take the form of the shoulder formation or the frusto-conical portion. The first and second cylindrical portion may be arranged in order of increasing diameter from the first end of the guide sleeve to the second end.

According to another aspect of the invention there is provided a powertrain mounting assembly for mounting a vehicle powertrain to a vehicle chassis. The powertrain mounting assembly comprises: an isolator for vibrationally isolating the powertrain from the chassis; a fastening element for joining the powertrain to the chassis, via the isolator; and a composite guide sleeve, as described in a previous aspect of the invention, for the fastening element. The fastening element is guided through the isolator by the guide sleeve so as to join the powertrain to the chassis, via the isolator, with the guide sleeve being arranged between opposing surfaces of the powertrain mounting assembly, such that the compressible portion of the guide sleeve is axially deformed, in situ, by a preload of the fastening.

In examples, the powertrain mounting assembly may further comprise respective mounting brackets of the chassis and/or the powertrain.

According to yet another aspect of the invention there is provided a vehicle comprising a composite guide sleeve as described in a previous aspect of the invention or a powertrain mounting assembly as described in another previous aspect of the invention.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DECRIPTION OF THE DRAWINGS

One or more embodiments of the invention will now be described, by way of example only, with reference to the accompanying drawings, in which:
Figure 1 schematically shows a perspective view of a conventional support frame portion of a vehicle chassis for supporting a powertrain in a vehicle;
Figure 2 shows a cross-sectional view of an exemplary prior art powertrain mounting assembly for a vehicle;
Figure 3 schematically shows a side view of an exemplary vehicle according to an embodiment of the invention;
Figure 4 shows a cross-sectional view of an exemplary powertrain mounting assembly of the vehicle, shown in Figure 3, according to an embodiment of the invention;
Figure 5 shows a perspective view of an exemplary guide sleeve of the mounting assembly, shown in Figure 4, according to an embodiment of the invention; and
Figure 6 shows a partial exploded view of the powertrain mounting assembly shown in Figure 4.

### DETAILED DESCRIPTION

Embodiments of the present invention relate to a powertrain mounting assembly and to a composite guide sleeve of such an assembly for aiding the mounting of a powertrain to a chassis of a vehicle.

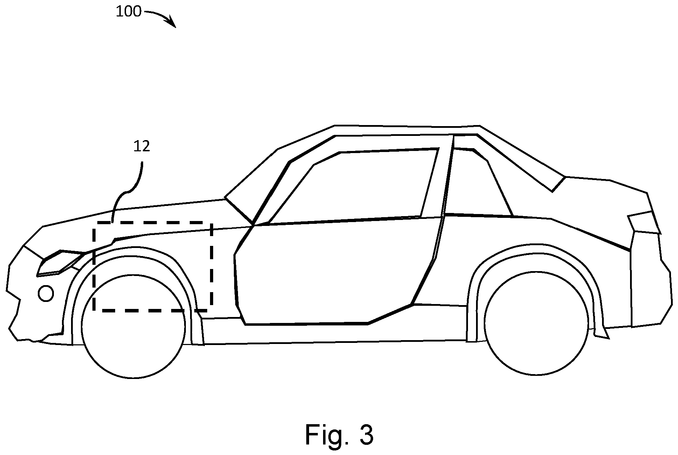

Figure 3 shows an exemplary vehicle 100 in accordance with an embodiment of the invention. In this example, the vehicle 100 is an automotive vehicle, such as a passenger car, though this example is not intending to be limiting on the scope of the invention.

For the purposes of the following description, the directions up, down, forward, rearward, left, and right are defined relative to the general orientation and driving direction of the vehicle 100 shown in Figure 3.

The vehicle 100 includes a chassis (not shown), which acts as the main load bearing structure of the vehicle 100, and a powertrain 12 (indicated by the area surrounded by the dashed line in Figure 3) acting as a source of drive power for the vehicle 100. The chassis includes a support frame (not shown in Figure 3), substantially as described in relation to Figure 1, for supporting the powertrain 12. In this example, the support frame is defined towards a front end of the vehicle 100 to provide a front-mounted powertrain 12. However, this arrangement is not intended to be generally limiting on the scope of the invention and, in other examples, the chassis may define such a support frame toward the middle or the rear of the vehicle 100, for example.

The specification of the powertrain 12 is similarly not intended to be particularly limiting on the scope of the invention and may take various suitable forms, within the scope of the present invention, that provide a source of drive for the vehicle 100. For example, the powertrain 12 may take the form of an internal combustion engine or an electrical machine, such as an electric motor. It shall be appreciated that the references herein to the 'powertrain' are intended to additionally encompass a powertrain frame or brackets for attaching the powertrain 12 to the vehicle chassis.

As discussed in relation to Figure 1, the powertrain support frame 10 is defined by a portion of the vehicle chassis used to substantially fix the powertrain 12 in position and may include first and second parallel side members 14A, 14B for this purpose, arranged along left and right side of the vehicle 100. Moreover, in examples, the first and second side members 14A, 14B may be joined together by one or more transverse members 16, which may be fixed, for example by welding, or releasably fastened to the side members 14A, 14b. The exemplary layout of the support frame 10 shown in Figure 1 is not intended to be limiting on the scope of the invention though and is provided by way of example only.

As discussed previously, each of the side members 14A, 14B and the transverse member 16 may feature at least one mounting point, defined by a respective mounting bracket of the chassis, which may be used as part of a powertrain mounting assembly for supporting the powertrain 12 in situ.

However, although powertrain mounting assemblies are known that include an isolator or vibration damper for isolating the vehicle chassis from vibrations generated by the operation of the powertrain 12, such mounting assemblies remain susceptible to NVH issues.

In this respect, the inventors of the present invention have found that a significant source of such NVH issues is the stack up of tolerances in the powertrain mounting assembly, which means that the low-cost guide sleeve is inappropriately sized for the connection and free to vibrate axially, in situ. This movement results in noise, audible to occupants of the vehicle, as the guide sleeve is excited by vibrations generated by the powertrain 12 and vehicle operations, as shall be described in more detail with additional reference to Figure 2.

In particular, referring to Figure 2, the guide sleeve 28 is used to guide the fastening element 26 through the isolator 24, and is designed to fit within a nominal gap defined between opposing surfaces of the washer or retaining element 32 and the powertrain 12. However, the guide sleeve 28 is necessarily a relatively low-cost component, which therefore has a relatively large manufacturing tolerance. Due to the stack up, or accumulation, of tolerances in the powertrain mounting assembly 18, the guide sleeve 28 is often too short for the gap, resulting in some clearance 36 between the opposing surfaces. Such clearance 36 means that the guide sleeve 28 is able to move axially, along the fastening element 26, post installation. This movement results in noise, audible to occupants of the vehicle, as the guide sleeve 28 is excited by vibrations of the powertrain 12 and vehicle. Increasing the length of the guide sleeve 28 to prevent relative movement is unfeasible due to the relative fragility of the guide sleeve 28 and the tendency of the guide sleeve 28 to fracture under compression (i.e. if the specified size of the guide sleeve 28 were increased). Reducing the tolerance range of the guide sleeve 28 is also not a suitable remedy, as such modifications would significantly increase the cost of the part.

The undesirable result is that vibration from the powertrain 12 causes excitation of the guide sleeve 28, thus causing a buzz or rattle sound as the guide sleeve 28 collides with the surfaces of the powertrain mount assembly 18.

Embodiments of the present invention relate to a powertrain mounting assembly and to a composite guide sleeve of such an assembly for mitigating such issues.

Advantageously, according to embodiments of the present invention, the guide sleeve is a composite component formed of first and second materials defining a relatively rigid or stiff body portion and a relatively compressible body portion arranged along the length of the sleeve. That is, respective longitudinal portions of the guide sleeve are formed of one of the first and second materials, where the second material has a lower modulus of elasticity than the first material to define a relatively rigid body portion and a relatively compressible body portion. With this construction, the guide sleeve can be oversized for the nominal gap between the opposing surfaces of the powertrain and the retaining element, and the compressible portion is axially squeezed or compressed as the fastening element is tightened / loaded to clamp the isolator between the powertrain and the retaining element. The axial compression of the guide sleeve ensures that the opposing ends of the guide sleeve engage opposing surfaces of the mounting assembly, with no axial clearance, thereby mitigating the vibrations and resulting noise.

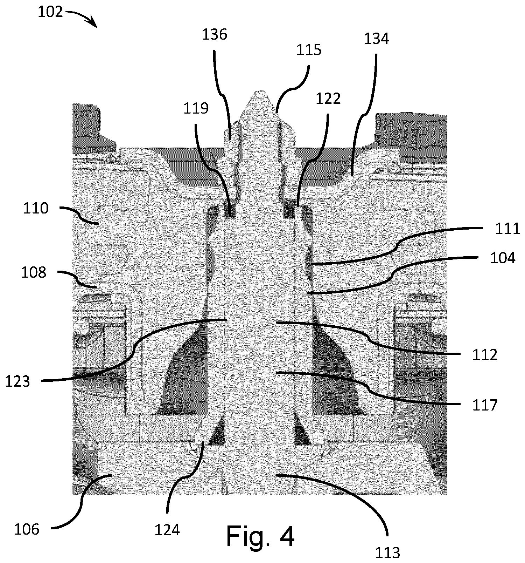

It is anticipated that embodiments of the invention will lead to reduced NVH levels, as experienced inside the vehicle cabin for example. Embodiments of the invention shall now be described with additional reference to Figure 4.

Figure 4 schematically shows a cross section of an exemplary powertrain mounting assembly 102, featuring a composite guide sleeve 104, in accordance with an embodiment of the invention. As discussed previously, the powertrain mounting assembly 102 may be installed at any one or more of the chassis mounting points to support the powertrain 12 and provide vibration isolation.

Similar to the example shown in Figure 2, the powertrain mounting assembly 102 is shown to join a frame / bracket portion 106 of the powertrain 12 to a respective bracket 108 of the chassis support frame 10. Such attachment is achieved using a fastening element 112, and the isolator 110 is arranged between the two frames / brackets 106, 108 in order to mitigate or dampen vibration transmission from the powertrain 12 to the chassis.

For consistency with the previous description, the fastening element 112 may form part of the powertrain sub-assembly and the isolator 110 may form part of the chassis sub-assembly, which are brought together to mount the powertrain 12. However, this arrangement is not intended to be limiting on the scope of the invention and it is envisaged that this arrangement could be reversed in other examples.

In each case, the isolator 110 is configured for arrangement between the respective brackets 106, 108 of the powertrain 12 and the chassis so as to dampen or otherwise mitigate the transmission of vibrations from the powertrain 12 to the support frame 10. The isolator 110 is therefore formed of a deformable and resilient material, configured to elastically withstand and absorb forces and vibrations applied by the powertrain 12 during operation of the vehicle 100. Suitable materials for this purpose are well-known in the art, and the isolator 110 may therefore be formed of a rubber material, such as an ethylene propylene diene monomer (EPDM) rubber, an acrylic rubber (alkyl acylate copolymer or ethylene acrylic rubber), natural rubber, or nitrile rubber, for example. The isolator 110 is received in an opening of the chassis mounting bracket 106 and may be attached to the bracket 106 by adhesive bonding, by an interference fit, or by overmoulding, for example, amongst other methods of attachment.

As shown in Figure 4, the isolator 110 may generally have a tubular and substantially cylindrical or discoidal shape, featuring a central bore 111 that extends through the length of the isolator 110 for receiving the fastening element 112. Although, the isolator 110 is generally cylindrical in this example, the external surfaces are shown to include further formations, such as a radially protruding flange, configured to provide NVH mitigation and/or shoulder formations for manipulation of the component during assembly. The bore 111 through the isolator 110 is provided for receiving the fastening element 112 and the guide sleeve 128. In examples, the bore 111 may be of substantially constant diameter or the bore may be further shaped to aid insertion of the fastening element 112 / guide sleeve 128. For example, the bore 111 may define a funnel-shaped opening at a lower end, as shown in Figure 4, for locating and encouraging the fastening element 112 / guide sleeve 128 therethrough.

The fastening element 112 is configured to join the powertrain 12 to the chassis with the isolator 110 arranged in the intermediate load path, clamped against the powertrain 12. In the example shown in Figure 4, the fastening element takes the form of a dual threaded fastener for this purpose, such as a captive shouldered machine bolt / screw. However, this example is not intended to be limiting on the scope of the invention and, in other examples, the fastening element may take other suitable forms.

A first end 113 of the fastening element 112 is coupled to the bracket 106 of the powertrain 12 and an opposing second end 115 of the fastening element 112 passes through the bore 111 of the isolator 110, such that tensioning the fastening element 112 clamps the isolator 110 against the powertrain 12. For example, although not shown, the first end 113 of the fastening element 112 may include an external thread for insertion into a complementary internally threaded opening of the powertrain bracket 106. The opposing second end 115 of the fastening element 112 projects through the isolator 110 and may similarly include an external thread for receiving a corresponding threaded fastening element, such as a nut 136. The nut 136 is tightened to tension the fastening element 112 and thereby clamp the isolator 110 and the powertrain 12 together. For this purpose, the powertrain mounting assembly 102 may further include a retaining element 134, such as a washer, for distributing the clamping force of the fastening across an upper surface of the isolator 110. As shown in Figure 4, the upper surface of the isolator 110 may therefore also define a protruding or recessed formation for receiving a complementary formation of the retaining element 134.

The fastening element 112 includes an elongate shaft portion 117, extending away from the first end 113 and terminating at a shoulder 119 adjacent the externally threaded second end 115. The shoulder 119 is configured to engage the retaining element 132 when the fastening element 112 is tensioned, so as to compress and clamp the isolator 110 against the mounting bracket 106 of the powertrain 12. It shall be appreciated that the length of the elongate shaft portion 117 therefore defines the nominal gap between the opposing surfaces of the retaining element 132 and the powertrain 12 (within which the isolator 110 and the guide sleeve 104 are disposed), as described in more detail below. In this manner, an upper surface of the powertrain bracket 108 is clamped against a lower surface of the isolator 110, and the isolator 110 is under compression so as to dampen or otherwise mitigate the transmission of vibrations from the powertrain 12 to the chassis.

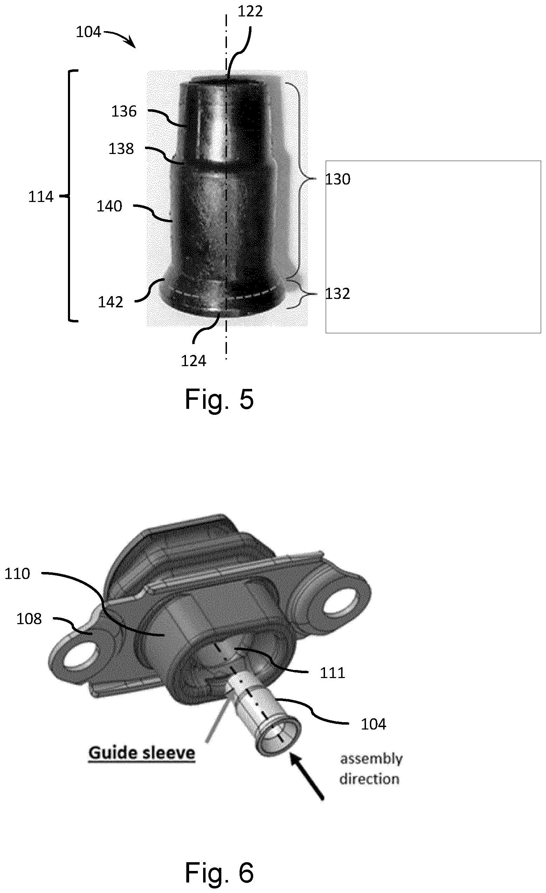

The guide sleeve 104 is configured to guide the fastening element 112 through the isolator 110 during attachment of the powertrain 12 to the chassis and to fit within the nominal gap defined by the elongate shaft portion 117. As shown in Figures 4 and 5, the composite guide sleeve 104 comprises an elongate tubular body 114 that extends from a first end 122 to a second end 124. The first end 122 of the tubular body 114 is configured to engage the retaining element 132 and the opposing second end of the tubular body 114 is configured to engage the mounting bracket 106 of the powertrain 12. A bore 123 extends through the guide sleeve 104, from the first end 122 to the second end 124 for receiving the fastening element 112.

To give some context, the elongate tubular body 114 may have an overall length, between the first and second ends 122, 124, corresponding to, and slightly exceeding that of the elongate shaft portion 117. For example, the tubular body 114 may have a length of between approximately 30 mm to 100 mm in examples. The internal diameter of the tubular body 114, defined by the bore 123, similarly corresponds to the size of the fastening element 112 and may provide a clearance fit around the fastening element 112, for example. The internal diameter of the bore 123 may therefore typically be between approximately 10 mm to 15 mm. These dimensions are provided for exemplary reference only though and variations of these dimensions are envisaged, for example depending on the weight or size of the powertrain.

The tubular body 114 is generally cylindrical but may include changes of form or shape along the length of the body 114. For example, changes in shape, particularly on the outer surfaces of the tubular body 114 may be provided to define `lead-in' geometry that aids insertion of the guide sleeve 104 into the bore 111 of the isolator 110. For example, such lead in geometry may comprise a gradual, stepped, or general widening / expansion of the sleeve 104 from one end to the other, as shall be described in more detail.

Advantageously, the guide sleeve 104 is a unitary composite component formed of the combination of at least a first material and a second material, which define a substantially rigid body portion 130 and a compressible body portion 132 along the length of the guide sleeve 104. That is, the guide sleeve 104 includes a rigid body portion 130, formed of the first material, which is suitable for insertion into the isolator 110, and a compressible body portion 132, formed of the second material, which is configured for elastic deformation under the fastening loads of the mounting assembly 102.

In embodiments of the invention, the compressible body portion 132 may take various forms along the length of the tubular body 114. For example, the compressible portion 132 may exist on either end of the guide sleeve 104, and the remainder of the tubular body 114 may constitute the rigid body portion 130. In other examples, the compressible body portion 132 may be arranged between two relatively rigid body portions and/or the tubular body 114 may include a plurality of such compressible body portions, for example being arranged at each of the first and second ends 122, 124 of the guide sleeve 104.

In each case, the first and second materials are selected such that a modulus of elasticity of the compressible body portion 132 is lower than the modulus of elasticity of the remaining rigid body portion 130. To give an example, the first material that forms the rigid body portion 130 may be a plastic material, such as a polyamide, nylon or polypropylene material, amongst others, which may be combined with Talc or Glass fibre in examples. In contrast, the second material that forms the compressible body portion 132 may be an elastically deformable and resilient material, encompassing various rubber materials, such as EPDM, an acrylic rubber, a natural rubber, or a nitrile rubber, for example. In this manner, the rigid body portion 130 remains substantially unaltered by the fastening load, while the compressible body portion 132 is axially deformed between the opposing surfaces of the powertrain mounting assembly 102, such that the overall length of the guide sleeve 104 matches the nominal gap defined by the elongate shaft 117. In this context, it shall be appreciated that references to the fastening load are intended to refer to the preload of the fastening element, which generates a clamping force exerted by the retaining element 132 and the powertrain 12. The force required to deform the second material is significantly less than, and may be negligible when compared to, the axial preload in the tightened fastening.

The rigid body portion 130 may typically define a 'major body portion' of the guide sleeve 104, while the compressible body portion 132 may define a 'minor body portion'. In this context, the terms 'major' and 'minor' concern the relative longitudinal extent of the respective portions along the length of the tubular body 114.

In this manner, most of the guide sleeve 104 is substantially rigid and forms part of the major body portion 130 for receiving the fastening element 112 and providing the lead-in function of the sleeve 104. Meanwhile the minor body portion 132 defines a relatively short elastically deformable / compressible portion provided to account for the stack up of tolerances in the mounting assembly 102.

In particular, the minor portion 132 is designed for elastic deformation under the fastening loads, such that the guide sleeve 104 can be formed to a nominal length and held in compression between the retaining element 132 and the powertrain 12. In situ, the resilient nature of the compressed minor body portion 132 urges the first and second ends 122, 124 of the guide sleeve 104 apart and against the retaining element 132 and the powertrain 12. This eliminates the clearance issues affecting prior art assemblies and thereby mitigates vibrations of the guide sleeve 104, as shall be described in more detail.

Although the guide sleeve 104 may take various suitable shapes within the scope of the invention, a more detailed example is provided below with reference to Figure 5. In this example, the shape of the exemplary guide sleeve 104 is shown to include first, second, third and fourth body portions 136, 138, 140, 142 arranged in longitudinal succession from the first end 122 to the second end 124. The first body portion 136 is a relatively narrow cylindrical portion defined at the first end 122 of the guide sleeve 104 for insertion into the isolator 110. The width or outer diameter of the tubular body 114 then increases along the length of the body 114 from the first end 122 to the second end 124. For example, the first and third body portions 136, 140 may each have a substantially constant diameter and the second body portion 138 may be arranged between the first and third body portions 136, 140 to define a transition portion, such as a tapered or frusto-conical portion, providing a gradual expansion from the first cylindrical portion 136 to the third cylindrical portion 140. That is, the first body portion 136 may take the form of a substantially cylindrical portion having a first outer diameter, and the second body portion 138 may define a tapered portion expanding radially outwards to the third body portion 140, which may define a further cylindrical portion having a second, increased, outer diameter. This example is not intended to be limiting on the scope of the invention though and, in other examples, the tubular body 114 may, for example, include a pair of cylindrical body portions arranged end-to-end to define a step-change in the outer diameter at the transition portion, forming a locating shoulder on the exterior of the guide sleeve 104.

It shall also be appreciated that the cylindrical body portions may include some minor changes in diameter along their length, for example including a draft angle to aid in manufacturing of the component. In other examples, the external surfaces of the sleeve may themselves have a frustoconical shape, with a narrow end being introduced to the isolator 110 during assembly of the powertrain mount.

In Figure 5, the fourth body portion 142 of the guide sleeve 104 is shown to take the form of a funnel-shaped section extending to the second end 124 of the tubular body 114. That is, the second end 124 of the guide sleeve 104, which receives the fastening element 112 and engages the powertrain 12, may define a funnel in which the open end of the section has a larger diameter than an opposing end in communication with rest of the tubular body 114. For example, in Figure 5, the fourth body portion 142 extends from the second end 124 of the guide sleeve 104 to the third body portion 140 and defines a funnel-shaped section for admitting the fastening element 112. The funnel-shaped section therefore improves the ease of assembling the guide sleeve 104 over the fastening element 112, specifically by defining a convergent inner surface for guiding the tip of the fastening element 112 into the bore 123 of the guide sleeve 104. The funnel-shaped section of the guide sleeve 104 may be frustoconical for this purpose, as shown in Figure 5, or otherwise define a convergent shape.

In the example shown in Figure 5, the compressible body portion 132 defines at least a portion of the funnel-shaped section (as indicated by the dashed circumferential line), while the remainder of the guide sleeve 104 constitutes the rigid body portion 130. That is, the compressible body portion 132 is defined by the fourth body portion 142, or a lower end thereof, forming a minor body portion of the tubular body 114. Meanwhile the rigid body portion 130 includes, the first, second, third, and (any remaining length of) the fourth body portions 136-142, defining a major body portion 130 of the guide sleeve 104.

Although this example is not intended to be limiting on the scope of the invention, the funnel-shaped section conveniently defines a region of relatively low axial stiffness, compared to the rest of the guide sleeve 104 and therefore provides beneficial deformation characteristics when the guide sleeve 104 is subjected to axial compression by the fastening element 112. In particular, the funnel-shaped section is readily deformable under an axial compressive force applied to the sleeve 104 to produce a predictable and repeatable deformation of the sleeve 104, that reliably accommodates the tolerance stack-up of the mounting assembly 102. Other tubular shapes that readily facilitate elastic deformation may also be suitable for this function in other examples.

It shall be appreciated that, within the scope of the claimed invention, the guide sleeve 104 may be formed according to various manufacturing methods that are known in the art, particularly those suitable to combining relatively hard and soft materials into one composite component. Such methods shall not be discussed in detail here to avoid obscuring the invention, but may include Exchange^{®} blow moulding methods or extrusion blow moulding methods, such as multilayer extrusion blow moulding, for example, amongst other methods that provide cost-effective production in large quantities.

The assembly of the powertrain mounting assembly 102 shall now be discussed in more detail with additional reference to Figure 6. Figure 6 shows an underside perspective view of the mounting bracket 108 of the support frame 10, and illustrates the insertion of the composite guide sleeve 104 into the bore 111 of the isolator 110.

Initially, the guide sleeve 104 is placed over a fastening element 112 of the powertrain sub-assembly. The powertrain subassembly is then offered up to the chassis sub-assembly and the guide sleeve 104 is inserted into the bore 111 of the isolator 110 as shown in Figure 6, guiding the fastening element 112 therethrough, with the lead-in geometry of the guide sleeve 104 helping to correct any misalignment with the bore 111. The powertrain 12 is then attached to the chassis by placing the retaining element 134 over the second end of the fastening element 112 and tightening the nut 136 on the exposed end of the fastening element 112 to clamp the powertrain 12 against the isolator 110, and thereby secure the attachment. In doing so, the fastening element 112 is tensioned and the resulting clamping forces compress the sleeve 104 between the opposing surfaces of the retaining element 134 and the mounting bracket 106 of the powertrain 12. The compressible body 132 is axially deformed by such forces, and the ends of the guide sleeve 104 are urged against the respective opposing surfaces, which mitigate axial movement of the guide sleeve 104 and any accompanying NVH issues.

In this manner, the ease of assembling the powertrain to the chassis is improved and the risk of NVH issues is mitigated. The composite nature of the guide sleeve 104 allows for axial compression of the guide sleeve 104 and the guide sleeve 104 can therefore be formed at low-cost without introducing NVH issues.

Many modifications may be made to the above examples without departing from the scope of the present invention as defined in the accompanying claims.

For example, although the fastening element 112 takes the form of a dual-threaded bolt in the example shown in Figures 4 to 6, this is not intended to be limiting on the scope of the invention and, in other examples, the fastening element may be replaced by a shaft and circlip or a standard nut and bolt, for example. Alternatively, in other examples, the first end of the fastening element 112 may not be threaded, and instead that end may be pressed into a bore of the powertrain 112 using an interference fit to secure the connection.

In other examples, the guide sleeve 104 may also take various suitable shapes providing a rigid body portion with lead-in geometry to aid with the assembly and a compressible body portion configured for compression between opposing surfaces of the mounting assembly, to mitigate the risk of relative movement and associated NVH.

## Claims

1. A composite guide sleeve for a fastening element of a powertrain mounting assembly, wherein the guide sleeve comprises:
an elongate tubular body extending from a first end to an opposing second end, the tubular body comprising:
a rigid body portion and a compressible body portion arranged along the length of the tubular body; and
a bore extending from the first end to the second of the tubular body for receiving the fastening element so that, in use, the sleeve guides the fastening element through an isolator of the powertrain mounting assembly so as to join, via the isolator, a vehicle powertrain to a chassis of the vehicle, with the guide sleeve arranged between opposing surfaces of the powertrain mounting assembly; and
wherein the rigid body portion is formed of a first material and the compressible body portion is formed of a second material, a modulus of elasticity of the second material being lower than that of the first material so that the compressible body portion is axially deformable between the opposing surfaces of the powertrain mounting assembly by a preload of the fastening.

2. A guide sleeve according to Claim 1, wherein the rigid body portion is a major body portion, and the compressible body portion is a minor body portion.

3. A guide sleeve according to Claim 1 or Claim 2, wherein the compressible body portion is formed at the second end of the tubular body for engaging one of the opposing surfaces of the powertrain mounting assembly, in use.

4. A guide sleeve according to any preceding Claim, wherein an end of the elongate tubular body comprises a funnel-shaped section.

5. A guide sleeve according to Claim 4, wherein the funnel-shaped section is frustoconical.

6. A guide sleeve according to Claim 4 or Claim 5, wherein at least a portion of the funnel-shaped section is defined by the compressible body portion.

7. A guide sleeve according to Claim 6, wherein the remainder of the guide sleeve is defined by the rigid body portion.

8. A guide sleeve according to any preceding claim, wherein the rigid body portion defines one or more lead-in features for guiding the sleeve through a bore of the isolator, in use.

9. A guide sleeve according to claim 8, wherein at least one lead-in feature is defined by an external expansion along the length of the tubular body, optionally being a shoulder formation; and/or a frusto-conical portion.

10. A guide sleeve according to any preceding claim, wherein the rigid body portion comprises:
a first cylindrical portion;
a second cylindrical portion having a greater outer diameter than the first cylindrical portion; and
a transition portion extending between the first and second cylindrical portions.

11. A guide sleeve according to Claims 9 and 10, wherein the transition portion takes the form of the shoulder formation or the frusto-conical portion.

12. A guide sleeve according to Claim 10 or Claim 11, wherein the first and second cylindrical portion are arranged in order of increasing diameter from the first end of the guide sleeve to the second end.

13. A powertrain mounting assembly for mounting a vehicle powertrain to a vehicle chassis, the powertrain mounting assembly comprising:
an isolator for vibrationally isolating the powertrain from the chassis;
a fastening element for joining the powertrain to the chassis, via the isolator; and
a composite guide sleeve, according to any preceding claim, for the fastening element;
wherein the fastening element is guided through the isolator by the guide sleeve so as to join the powertrain to the chassis, via the isolator, with the guide sleeve arranged between opposing surfaces of the powertrain mounting assembly, such that the compressible portion of the guide sleeve is axially deformed, in situ, by a preload of the fastening.

14. A powertrain mounting assembly, further comprising respective mounting brackets of the chassis and/or the powertrain.

15. A vehicle comprising a composite guide sleeve according to any of Claims 1 to 12 or a powertrain mounting assembly according to Claim 13 or Claim 14.
